# EUROPEAN PATENT SPECIFICATION

(11) **EP 3 316 546 B1**
(45) Date of publication and mention of the grant of the patent: **17.11.2021**
(21) Application number: 17189900.8
(22) Date of filing: 07.09.2017
(51) Int. Cl.: H04L 29/06

(54) **MULTIMEDIA INFORMATION LIVE METHOD AND SYSTEM, COLLECTING DEVICE AND STANDARDIZATION SERVER**
MULTIMEDIAINFORMATION-LIVE-VERFAHREN UND -SYSTEM, SAMMELVORRICHTUNG UND STANDARDISIERUNGSSERVER
PROCÉDÉ ET SYSTÈME D'INFORMATIONS MULTIMÉDIA EN DIRECT, DISPOSITIF DE COLLECTE ET SERVEUR DE STANDARDISATION

(30) Priority: 31.10.2016 WO PCT/CN2016/104098
(43) Date of publication of application: 02.05.2018
(73) Proprietor: Beijing Xiaomi Mobile Software Co., Ltd., Beijing 100085 (CN)
(72) Inventor: HAN, Shangyou, Beijing 100085 (CN); SUN, Chao, Beijing 100085 (CN); YU, Zegao, Beijing 100085 (CN)
(74) Representative: dompatent von Kreisler Selting Werner - Partnerschaft von Patent- und Rechtsanwälten mbB

(56) References cited:
- EP-A1- 2 985 980
- US-A1- 2012 064 879
- US-A1- 2012 265 892
- US-A1- 2014 137 162

## Description

### TECHNICAL FIELD

The present disclosure relates to a technical field of npetwork, and more particularly, to a multimedia information live method and system, a collecting device and a server.

### BACKGROUND

With the rapid development of network technology, there have been more and more network live platforms. Various kinds of multimedia information via the network live platforms may be played.

In the related art, a live mobile phone (for example, a mobile phone of an anchor) may login a server of the network live platform, then the server may send a live network address to the live mobile phone. After that, live video information may be collected by a camera of the live mobile phone and live audio information may be collected by a microphone of the live mobile phone. Finally, the live mobile phone may send multimedia information including collected live video information and live audio information to the live network address. A playing mobile phone (for example, a mobile phone of an audience) may also login the server of the network live platform, then the server may be triggered to send the multimedia information from the live network address to the playing phone, such that the playing mobile can receive the multimedia information and play it.

In the related art, the multimedia information collected by the camera or the microphone of the live mobile phone may have poor quality usually, and the multimedia information sent from the server to the playing mobile phone may also have poor quality, thus live quality of the multimedia information cannot be satisfied.

US 2012/064879 A1 discloses a mobile phone comprising a first buffer memory, a downloading means for downloading a data file from a web server in the first buffer memory, the file being accessible at a web address on the web server, the downloading means being connected to the first buffer memory, and a streaming server for streaming data to a remote client equipment according to a predetermined network protocol, the streaming server being connected to the first buffer memory. The streaming server is adapted to be connected to the remote client equipment via a data link and is adapted to receive, from the remote client equipment, a data streaming request The streaming server includes an activation means for activating the download means, said activation means being adapted to activate the downloading of said data file.

US 2012/265892 A1 discloses a system for media delivery including a server-side proxy for aggregating and encrypting stream data for efficient HTTP based distribution over an unsecured network. A client-side proxy decrypts and distributes the encapsulated stream data to client devices. A multicast-based infrastructure may be used for increased scalability. The encoded rate of the media delivered over the persistent HTTP proxy connections may be dynamically adapted. The client-side proxy may be integrated within a mobile device for maximum network security and reliability.

EP 2 985 980 A1 discloses a method and a device for playing stream media data. The method includes: obtaining a IP address of a smart camera by a first terminal; displaying a list of playing devices, in which the list includes device information of at least one terminal, and the at least one terminal has a function of playing the stream media data; sending the IP address to a second terminal if an instruction to select the second terminal is received , such that the second terminal obtains the stream media data based on the IP address , and converts the stream media data into an image for playing, the second terminal being any terminal of the at least one terminal.

US 2014/137162 discloses systems and methods for distributing an audio/visual feed of a live event include mixing ambient audio signals, from ambient microphones monitoring the live event, with sound board feed from the event public address system, thereby forming a mixed audio signal. A video input signal is received at each video input in a plurality of video inputs at a video board from corresponding cameras recording the event. One such video input signal is selected as the video board output and is combined with the mixed audio signal thereby producing an audio/visual signal. This signal is encoded using a video codec, at each of several bitrates, and an audio codec, thereby forming bitrate streams each comprising the video portion of the audio/visual signal at a unique bitrate. The streams are received by a satellite router and transmitted to a satellite which sends them to one or more downlink servers for Internet distribution.

### SUMMARY

According to a first aspect of the present disclosure, a multimedia information live method is provided according to claim 1. The method may be applied to a collecting device in a multimedia information live system, and the system includes a server, a live terminal, a playing terminal, and the collecting device. The method includes: receiving a live instruction sent from the live terminal; collecting ambient information to obtain multimedia information; sending the multimedia information to the server according to the live instruction, such that the server sends the multimedia information to the playing terminal, and the playing terminal receives and plays the multimedia information.

Alternatively, the multimedia information collected by the collecting device has a format of HDMI (high definition multimedia interface) or SDI (serial digital interface).

Alternatively, sending the multimedia information to the server includes sending the multimedia information to the server based on real time messaging protocol RTMP.

In accordance with the invention, the live instruction carries a first network address, and the first network address belongs to at least one network address of the server.

According to a second aspect of the present disclosure, a multimedia information live method is provided according to claim 4. The method may be applied to a server in a multimedia information live system, and the multimedia information live system includes a collecting device, a live terminal, a playing terminal, and the server. The method includes: receiving multimedia information sent from the collecting device according to a live instruction, in which the multimedia information is obtained by the collecting device via collecting ambient information, and the live instruction is sent from the live terminal to the collecting device; sending the multimedia information to the playing terminal, such that the playing terminal receives and plays the multimedia information.

Alternatively, the multimedia information collected by the collecting device has a format of HDMI or SDI.

Alternatively, receiving multimedia information sent from the collecting device according to a live instruction includes receiving the multimedia information sent from the collecting device according to the live instruction based on RTMP.

Alternatively, the server has at least two network addresses, and the method further includes: receiving a live request sent from the live terminal; selecting a first network address and a second network address from the at least two network addresses of the server, in which the first network address and the second network address indicate different storage modules of the server; sending the first network address to the live terminal, such that the live terminal send the live instruction carrying the first network address to the collecting device.

Alternatively, the method further includes: saving the multimedia information into a storage module indicated by the first network address; standardizing the multimedia information to make parameters of standardized multimedia information in accordance with live parameters of the playing terminal; saving the standardized multimedia information into a storage module indicated by the second network address; receiving a playing request carrying the second network address from the playing terminal; and sending the multimedia information to the playing terminal includes: obtaining the standardized multimedia information from the storage module indicated by the second network address; sending the standardized multimedia information to the playing terminal by a live delivery mechanism and a content delivery network CDN mechanism.

According to a third aspect of the present disclosure, a collecting device is provided according to claim 8. The collecting device is included in a multimedia information live system, and the multimedia information live system further includes a server, a live terminal, and a playing terminal. The collecting device includes: a receiving module, configured to receive a live instruction sent from the live terminal; a collecting module, configured to collect ambient information to obtain multimedia information; a sending module, configured to send the multimedia information to the server according to the live instruction, such that the server sends the multimedia information to the playing terminal, and the playing terminal receives and plays the multimedia information.

Alternatively, the multimedia information collected by the collecting device has a format of HDMI or SDI.

Alternatively, the sending module is further configured to send the multimedia information to the server based on RTMP.

Alternatively, the live instruction carries a first network address, and the first network address belongs to at least one network address of the server.

According to a fourth aspect of the present disclosure, a server is provided according to claim 10. The server is included in a multimedia information live system, and the multimedia information live system further includes a collecting device, a live terminal, and a playing terminal. The server includes: a first receiving module, configured to receive multimedia information sent from the collecting device according to a live instruction, in which the multimedia information is obtained by the collecting device via collecting ambient information, and the live instruction is sent from the live terminal to the collecting device; a first sending module, configured to send the multimedia information to the playing terminal, such that the playing terminal receives and plays the multimedia information.

Alternatively, the multimedia information collected by the collecting device has a format of HDMI or SDI.

Alternatively, the first receiving module is further configured to receive the multimedia information sent from the collecting device according to the live instruction based on RTMP.

Alternatively, the server has at least two network addresses, and the server further includes: a second receiving module, configured to receive a live request from the live terminal; a selecting module, configured to select a first network address and a second network address from the at least two network addresses of the server, in which the first network address and the second network address indicate different storage modules of the server; a second sending module, configured to send the first network address to the live terminal, such that the live terminal send the live instruction carrying the first network address to the collecting device.

Alternatively, the server further includes: a first storage module, configured to save the multimedia information into a storage module indicated by the first network address; a processing module, configured to standardize the multimedia information to make parameters of standardized multimedia information in accordance with live parameters of the playing terminal; a second storage module, configured to save the standardized multimedia information into a storage module indicated by the second network address; a third receiving module, configured to receive a playing request carrying the second network address from the playing terminal; the first sending module is further configured to obtain the standardized multimedia information from the storage module indicated by the second network address; and send the standardized multimedia information to the playing terminal by a live delivery mechanism and a CDN mechanism.

According to a fifth aspect of the present disclosure, a collecting device is provided. The collecting device is included in a multimedia information live system, and the multimedia information live system further includes a server, a live terminal, and a playing terminal. The collecting device includes a receiver, configured to receive a live instruction sent from the live terminal; a processor, configured to collect ambient information to obtain multimedia information; a transmitter, configured to send the multimedia information to the server according to the live instruction, such that the server sends the multimedia information to the playing terminal, and the playing terminal receives and plays the multimedia information.

Alternatively, the multimedia information collected by the collecting device has a format of HDMI or SDI.

Alternatively, the transmitter is further configured to send the multimedia information to the server based on RTMP.

Alternatively, the live instruction carries a first network address, and the first network address belongs to at least one network address of the server.

According to a sixth aspect of the present disclosure, a server is provided. The server is included in a multimedia information live system, and the multimedia information live system further includes a collecting device, a live terminal, and a playing terminal. The server includes: a processing component, a memory, configured to store instructions executable by the processing component; in which, the processing component is configured to execute the instructions so as to perform the multimedia information live method according to the second aspect of the present disclosure.

According to a seventh aspect of the present disclosure, a multimedia information live system is provided. The multimedia information live system includes a collecting device, a server, a live terminal, and a playing terminal, in which the collecting device is a collecting device according to the third aspect of the present disclosure, and the server is a server according to the fourth aspect of the present disclosure, or the collecting device is a collecting device according to the fifth aspect of the present disclosure, and the server is a server according to the sixth aspect of the present disclosure.

It is to be understood that both the foregoing general description and the following detailed description are exemplary and explanatory only, thus cannot be deemed as restriction of the present disclosure.

### BRIEF DESCRIPTION OF THE DRAWINGS

In order to give a more clearly illustration of technical solutions of embodiments of the present disclosure, drawings these will be used in descriptions of the embodiments are introduced briefly as follows. Obviously, the drawings described below are only some embodiments of the present disclosure, and other drawings can be obtained by those skilled in the art according to these drawings without creative labors.
Fig. 1 is a schematic diagram illustrating a multimedia information live system according to an example embodiment.
Fig. 2 is a flow chart illustrating a multimedia information live method according to an example embodiment.
Fig. 3 is a flow chart illustrating another multimedia information live method according to an example embodiment.
Fig. 4 is a flow chart illustrating yet another multimedia information live method according to an example embodiment.
Fig. 5-1 is a schematic diagram illustrating a user interface according to an example embodiment.
Fig. 5-2 is a schematic diagram illustrating another user interface according to an example embodiment.
Fig. 5-3 is a schematic diagram illustrating yet another user interface according to an example embodiment.
Fig. 6 is a schematic diagram illustrating a collecting device according to an example embodiment.
Fig. 7-1 is a schematic diagram illustrating a server according to an example embodiment.
Fig. 7-2 is a schematic diagram illustrating another server according to an example embodiment.
Fig. 7-3 is a schematic diagram illustrating yet another server according to an example embodiment.
Fig. 8 is a schematic diagram illustrating another collecting device according to an example embodiment.
Fig. 9 is a schematic diagram illustrating still another server according to an example embodiment.

The accompanying drawings, which are incorporated in and constitute a part of this specification, illustrate embodiments consistent with the present disclosure and, together with the description, serve to explain the principles of the present disclosure.

### DETAILED DESCRIPTION

In order to make objectives, technical solutions and advantages of the present disclosure more easily to appreciate, details of embodiments of the present disclosure will be illustrated with reference to accompany drawings as follows. Obviously, the illustrated embodiments are only parts but not all of the embodiments of the present disclosure. All the other embodiments obtained by those skilled in the art on the basis of embodiments of the present disclosure without creative labors will be within the scope of the present disclosure.

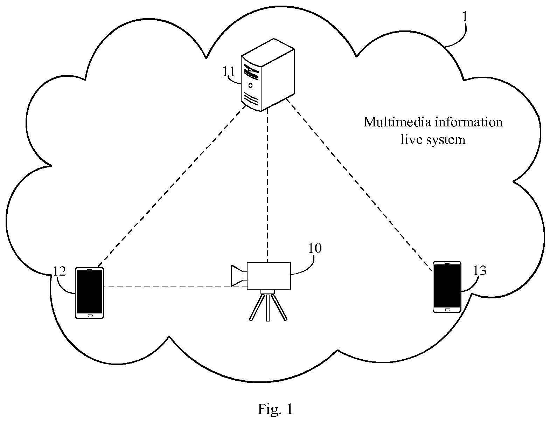

Fig. 1 is a schematic diagram illustrating a multimedia information live system according to an example embodiment. As shown in Fig.1, the multimedia information live system 1 may include a collecting device 10, a server 11, a live terminal 12 and a playing terminal 13. Both the live terminal 12 and the playing terminal 13 may login the server 11 and establish communication connections with the server 11. The live terminal 12 may also establish a communication connection with the collecting device 10.

For example, the communication connections among the collecting device 10, the server 11, the live terminal 12 and the playing terminal 13 may be established through a wired network or a wireless network. There are no limits on that in the present disclosure. In detail, types of the wired network may include but be not limited to: universal serial bus (USB). Types of the wireless network may include but be not limited to: wireless fidelity (WIFI), blue tooth, infrared, ZigBee and data, etc. It should be noted that the live terminal of the present disclosure may a mobile phone.

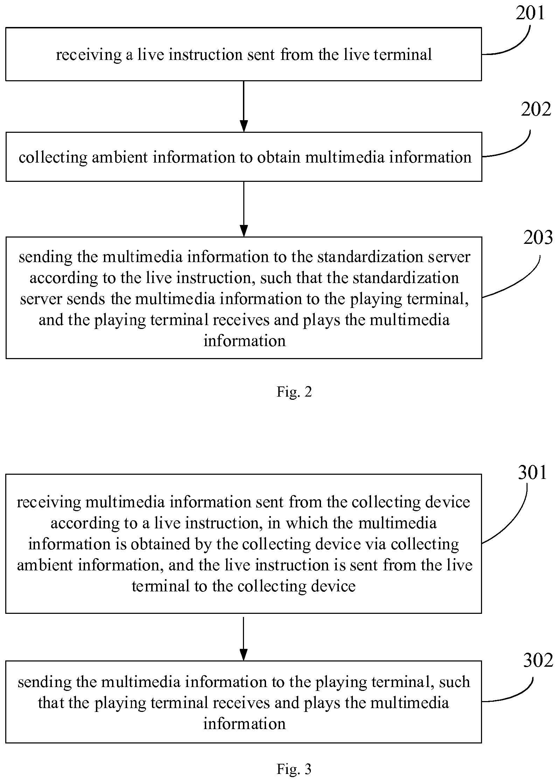

Fig. 2 is a flow chart illustrating a multimedia information live method according to an example embodiment. The multimedia information live method may be applied to the collecting device 10 of the multimedia information live system 1 shown in Fig. 1. As shown in Fig.2, the multimedia information live method may include following acts.

At block 201, a live instruction sent from a live terminal is received.

At block 202, ambient information is collected to obtain multimedia information.

At block 203, the multimedia information is sent to the server according to the live instruction, such that the server may send the multimedia information to the playing terminal, and the playing terminal receives and plays the multimedia information.

In summary, with the multimedia information live method according to embodiments of the present disclosure, when the collecting device receives the live instruction sent from the live terminal, it may send the collected multimedia information to the server, such that the server may send the multimedia information to the playing terminal so as to be played. Since the collecting device and the live device are separate, quality of the multimedia information collected by the collecting device may be improved by improving configuration parameters of the collecting device. Thus quality of the multimedia information received by the playing terminal may be improved accordingly and playing effect of the multimedia information may be improved.

Alternatively, the multimedia information collected by the collecting device may have a format of HDMI (high definition multimedia interface) or SDI (serial digital interface).

Alternatively, block 203 may include sending the multimedia information to the server based on RTMP (real time messaging protocol).

Alternatively, the live instruction carries a first network address, and the first network address belongs to at least one network address of the server.

Fig. 3 is a flow chart illustrating another multimedia information live method according to an example embodiment. The multimedia information live method may be applied to the server 11 of the multimedia information live system 1 shown in Fig. 1. As shown in Fig. 3, the multimedia information live method may include following acts.

At block 301, multimedia information sent from the collecting device according to a live instruction is received, in which the multimedia information is obtained by the collecting device via collecting ambient information, and the live instruction is sent from the live terminal to the collecting device.

At block 302, the multimedia information is sent to the playing terminal, such that the playing terminal receives and plays the multimedia information.

In summary, with the multimedia information live method according to embodiments of the present disclosure, when the server receives the multimedia information which is obtained via collecting the ambient information and sent by the collecting device according to the live instruction, it may send the multimedia information to the playing terminal so as to be played. Since the collecting device and the live device are separate, quality of the multimedia information collected by the collecting device may be improved by improving configuration parameters of the collecting device. Thus quality of the multimedia information received by the playing terminal may be improved accordingly and playing effect of the multimedia information may be improved.

Alternatively, the multimedia information collected by the collecting device may have a format of HDMI (high definition multimedia interface) or SDI (serial digital interface).

Alternatively, block 301 may include receiving the multimedia information sent from the collecting device according to the first network address based on RTMP.

Alternatively, the server has at least two network addresses, and the multimedia information live method may further include: receiving a live request sent from the live terminal; selecting a first network address and a second network address from the at least two network addresses of the server, in which the first network address and the second network address may indicate different storage modules of the server; sending the first network address to the live terminal, such that the live terminal may send the live instruction carrying the first network address to the collecting device.

Alternatively, the multimedia information live method may further include: saving the multimedia information into a storage module indicated by the first network address; standardizing the multimedia information to make parameters of standardized multimedia information in accordance with live parameters of the playing terminal; saving the standardized multimedia information into a storage module indicated by the second network address; and receiving a playing request carrying the second network address from the playing terminal.

And the above block 302 may include: obtaining the standardized multimedia information from the storage module indicated by the second network address; sending the standardized multimedia information to the playing terminal by a live delivery mechanism and a content delivery network (CDN) mechanism.

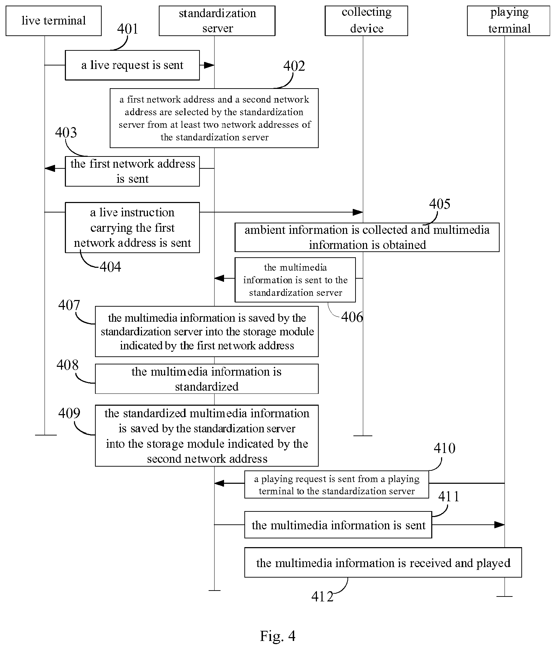

Fig. 4 is a flow chart illustrating yet another multimedia information live method according to an example embodiment. The multimedia information live method may be applied to the multimedia information live system 1 shown in Fig. 1. As shown in Fig. 4, the multimedia information live method may include following acts.

At block 401, a live request is sent from the live terminal to the server.

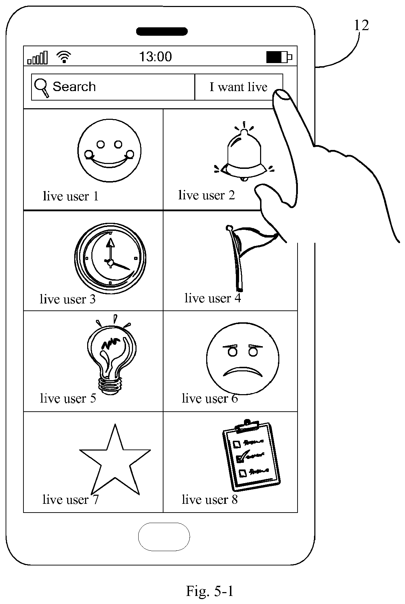

For example, the anchor may login the server through the live terminal, and a communication connection between the live terminal and the server may be established after the anchor has successfully logged into the server. Here, a user interface of the live terminal 12 may be illustrated as Fig 5-1. An "I want live" button may be displayed on the user interface of the live terminal 12. When the user wants to perform a live, he/she may directly click the "I want live" button so as to trigger the live terminal to send the live request to the server.

Furthermore, users currently on live and live images (picture or video) relating to the users may be displayed on the user interface of the live terminal 12. For example, the user interface illustrated in Fig. 5-1 shows 8 users currently being on live and image relating to each of the 8 users. A search box may also be displayed on the user interface of the live terminal 12. When the user wants to watch a live of another user, the search box may be clicked and an identifier of the other user (e.g. user name) may be input in the search box, and then the live of the other user may be displayed on the live terminal.

At block 402, a first network address and a second network address are selected by the server from at least two network addresses of the server.

For example, a plurality of (at least two) storage modules may be provided in the server and each storage module has a network address. The least two network addresses of the server may be the network addresses of the at least two storage modules. When the server receives the live request sent from the live terminal, the first network address and the second network address may be selected by a preset method from the at least two network addresses of the server, and the first network address and the second network address may indicate different storage modules of the server. Alternatively, the preset method may be a random selection method or other selection methods, and there are no limits on that in the present disclosure.

At block 403, the first network address is sent from the server to the live terminal.

When the first network address and the second network address are selected by the server, the first network address may be sent to the live terminal directly. For example, the server may generate a message including the first network address and send the message including the first network address to the live terminal according to a certain communication protocol.

At block 404, a live instruction carrying the first network address may be sent from the live terminal to the collecting device.

When the live terminal receives the first network address sent by the server, the live terminal may generate the live instruction carrying the first network address according to the first network address, and send the live instruction carrying the first network address to the collecting device. Alternatively, when the live terminal receives the massage including the first network address sent by the server, the live terminal may directly process the massage including the first network address (for example to add a message header or message trailer) and then send the processed message to the collecting device.

At block 405, ambient information is collected by the collecting device to obtained multimedia information.

For example, the collecting device may include a collecting module. At block 405, the collecting device may collect the ambient information via the collecting module so as to obtain the multimedia information. The collecting module in embodiments of the present disclosure may be a professional photograph module and the multimedia information collected by the collecting module may have a format of HDMI (high definition multimedia interface) or SDI (serial digital interface).

The collecting module may further include at least one collecting unit and one directing unit. Each collecting unit may include a video collecting sub-unit and an audio collecting sub-unit. The video collecting sub-unit is configured to collect video information and the audio collecting sub-unit is configured to collect audio information. Multimedia information collected by the collecting unit may include the video information collected by the video collecting sub-unit and the audio information collected by the audio collecting sub-unit. Each of the at least one collecting unit is connected to the one directing unit, and the multimedia information collected by each of the collecting units is sent to the directing unit. The directing unit may select one piece of multimedia information from at least one piece of multimedia information sent from the at least one collecting unit as the multimedia information collected by the collecting module.

At block 406, the multimedia information is sent to the server by the collecting device according to the live instruction.

Alternatively, the collecting device may further include an encoding module and a sending module. The collecting module, the encoding module and the sending module of the collecting device are connected one by one. At block 405, when the multimedia information is obtained by the collecting device via the collecting module, the multimedia information may be sent directly from the collecting module to the encoding module.

When the encoding module receives the multimedia information, the multimedia information may be encoded directly. For example, the multimedia information may include video information and audio information, in which, the encoded video information may be with a new generation of digital video compression format (H.264 ), and the encoded video information may be with a format of ACC (Advanced Audio Coding).

When the multimedia information has been encoded, the encoded multimedia information may be sent to the sending module by the encoding module. For example, the sending module may be a module that can transmit information based on RTMP (real time messaging protocol). When the sending module receives the encoded multimedia information, the encoded multimedia information may be sent to the server according to the first network address based on RTMP. Alternatively, the sending module may send the encoded multimedia information to a storage module indicated by the first network address of the server according to the first network address. It should be noted that the server may also receive the encoded multimedia information sent by the sending module based on RTMP.

At block 407, the multimedia information is saved by the server into the storage module indicated by the first network address.

Alternatively, the encoded multimedia information sent to the server by the sending module at block 406 may further include the first network address. When the server receives the encoded multimedia information sent by the collecting device via the sending module, the encoded multimedia information may be directly saved (cached) into the storage module indicated by the first network address.

At block 408, the multimedia information is standardized by the server.

When the server saves the encoded multimedia information, the encoded multimedia information may be processed such that the processed multimedia information can be played by the playing terminal.

For example, the server may decode the encoded multimedia information first and obtain decoded multimedia information. Then, the server may standardize the decoded multimedia information to make parameters of standardized multimedia information in accordance with live parameters (e.g. resolution and frequency) of the playing terminal.

Since the collecting device in embodiments of the present disclosure is a professional collecting device, video information collected by the professional collecting device may be with a relatively higher resolution, and the frequency of the video and audio information may also be relatively higher. While video information played by the playing terminal (for example, a mobile phone) may have a relatively lower resolution, and the frequency of the video and audio information may also be relatively lower. When the multimedia information is standardized by the server, the resolution and the frequency of the multimedia information may be adjusted such that the parameters of the standardized multimedia information may be in a range same to which of the playing parameters of the playing terminal, and the standardized multimedia information can be played on the playing terminal.

At block 409, the standardized multimedia information is saved by the server into the storage module indicated by the second network address.

When the multimedia information has been standardized by the server, the standardized multimedia information may be saved into the storage module indicated by the second network address, in which the second network address is selected in advance.

It should be noted that, the standardized multimedia information may just be cached into the storage module indicated by the second network address. When the standardized multimedia information have been cached on the storage module indicated by the second network address for a preset duration, the server may delete the standardized multimedia information in the storage module indicated by the second network address, or send the multimedia information to other server(s).

Alternatively, at block 402, when the first network address and second network address are selected by the server, correspondence among the live user (the user login from the live terminal), the first network address and the second network address may be established. Alternatively, when the server receives the multimedia information sent by the collecting device, the server may expand the previously established correspondence and obtain correspondence among the live user, the first network addresses, the second network addresses and the collecting device.

For example, the correspondence among the live user, the first network addresses, the second network addresses and the collecting device obtained by the server may be illustrated as table 1. For example, a live user M, a first network address XI, a second network address Y1 and a collecting device W1 are corresponded with each other. This indicate that when the live user M logins the server, the server may allocate the first network address XI and the second network address Y1 to the live user M and send the first network address XI to a live terminal used by the live user M. The live terminal used by the live user M may directly send the first network address XI to the collecting device W1. When multimedia information is collected by the collecting device W1, the multimedia information is sent to a storage module of the server indicated by the first network address XI. Then the multimedia information in the storage module indicated by the first network address XI is standardized by the server, and then standardized multimedia information is stored in a storage module indicated by the second network address Y1.

**Table 1**

| live user | first network address | second network address | collecting device |
|---|---|---|---|
| M | X1 | Y1 | W1 |

At block 410, a playing request is sent from the playing terminal to the server.

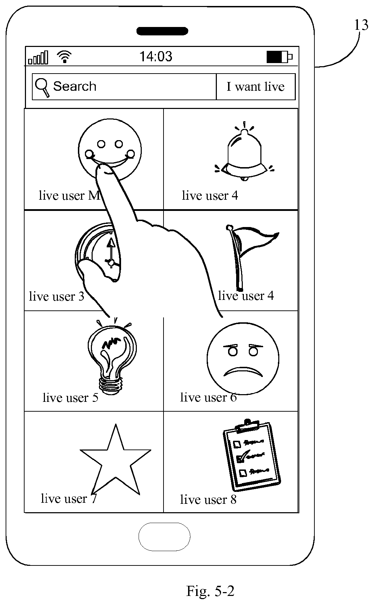

The audience may also login the server through the playing terminal, and a communication connection between the playing terminal and the server may be established after the audience has successfully logged into the server. A user interface of the playing terminal 13 is illustrated as Fig. 5-2. When the anchor (the live user) according to embodiments of the present disclosure is the live user M, the audience may directly click the area which represents the live user M and is located on the user interface. When the area representing the live user M is clicked by the audience, the playing terminal is triggered to generate the playing request carrying the second network address and send the playing request to the server.

At block 411, the multimedia information is sent from the server to the playing terminal.

For example, when the server receives the playing request sent from the playing terminal, the server may extract the second network address from the playing request, obtain the standardized multimedia information from the storage module indicated by the second network address, and then send the standardized multimedia information cached in the storage module indicated by the second network address to the playing terminal in real time.

Alternatively, when playing requests carrying the second network address from a plurality of playing terminals are received by the server at the same time, the server may send the standardized multimedia information to the plurality of playing terminals based on a live delivery mechanism and CDN (content delivery network) mechanism.

At block 412, the multimedia information is received and played by the playing terminal.

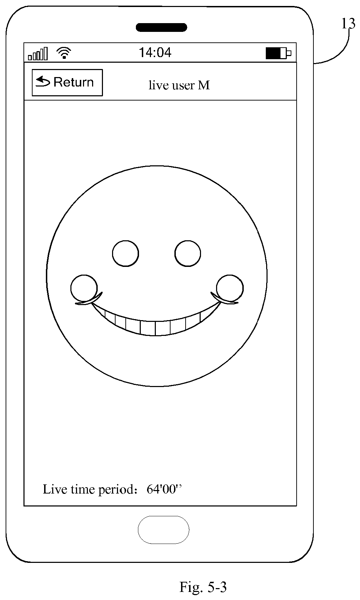

When the playing terminal receives the multimedia information, the multimedia information may be played. For example, at this time, a user interface of the playing terminal 13 may be illustrated as Fig. 5-3. Currently, the anchor is the live user M, a total live time period of the live user M may also be displayed on the user interface. For example, if the live user M begins to perform live at 13 o'clock, when the audience uses the playing terminal to play multimedia information provided by the live user M at 14:04, the total live 64'00" time period that the live user M has performed may be displayed on the user interface of the playing terminal of the audience.

In summary, with the multimedia information live method, when the collecting device receives the live instruction sent from the live terminal, it may send the collected multimedia information to the server, such that the server may send the multimedia information to the playing terminal so as to be played. Since the collecting device and the live device are separate, quality of the multimedia information collected by the collecting device may be improved by improving configuration parameters of the collecting device. Thus quality of the multimedia information received by the playing terminal may be improved accordingly and playing effect of the multimedia information may be improved.

It should be noted that the order of the steps or blocks of the multimedia information live method provided in embodiments of the present disclosure may be adjusted and addition or reduction of the steps or blocks may be performed according to different practices. Any changes or alternatives within the technical scope of the present disclosure that can be easily made by those skilled in the art should fall in the scope of the present disclosure, therefore will not be elaborated.

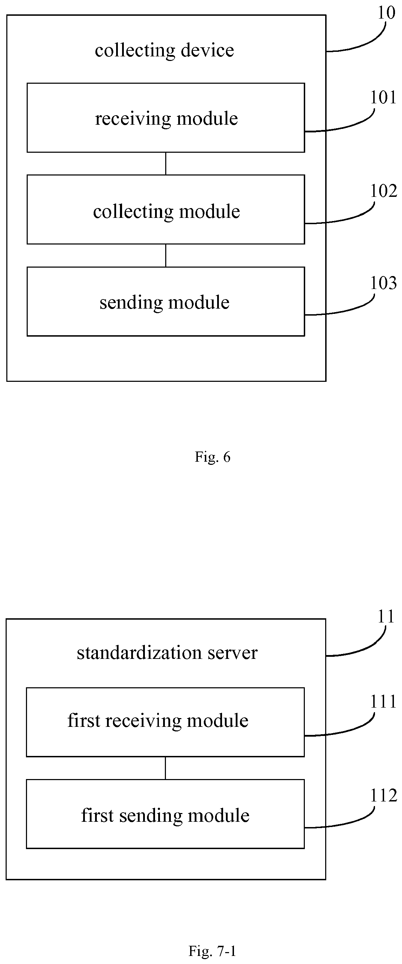

Fig. 6 is a schematic diagram illustrating a collecting device 10 according to an example embodiment. The collecting device 10 may be included in the multimedia information live system 1 shown in Fig. 1. The collecting device 10 includes a receiving module 101, a collecting module 102, and a sending module 103.

The receiving module 101 is configured to receive a live instruction sent from a live terminal.

The collecting module 102 is configured to collect ambient information so as to obtain multimedia information.

The sending module 103 is configured to send the multimedia information to the server according to the live instruction, such that the server may send the multimedia information to the playing terminal, and the playing terminal receives and plays the multimedia information.

In summary, with the collecting device according to embodiments of the present disclosure, when the live instruction sent from the live terminal is received by the receiving module, the collecting module may collect the multimedia information according to the live instruction, and the collected multimedia information may be sent from the sending module to the server such that the multimedia information may be further sent from the server to the playing terminal and finally be played. Since the collecting device and the live device are separate, quality of the multimedia information collected by the collecting device may be improved by improving configuration parameters of the collecting device. Thus quality of the multimedia information received by the playing terminal may be improved accordingly and playing effect of the multimedia information may be improved.

Alternatively, the multimedia information collected by the collecting device may have a format of HDMI or SDI.

Alternatively, the sending module 103 may be further configured to send the multimedia information to the server based on RTMP.

Alternatively, the live instruction carries a first network address, and the first network address belongs to at least one network address of the server.

Fig. 7-1 is a schematic diagram illustrating a server 11 according to an example embodiment. The server 11 may be included in the multimedia information live system 1 shown in Fig. 1. The server 11 includes a first receiving module 111 and a first sending module 112.

The first receiving module 111 is configured to receive multimedia information sent from the collecting device according to a live instruction, in which the multimedia information is obtained by the collecting device via collecting ambient information, and the live instruction is sent from the live terminal to the collecting device.

The first sending module 112 is configured to send the multimedia information to the playing terminal, such that the playing terminal receives and plays the multimedia information.

In summary, with the server according to embodiments of the present disclosure, when the first receiving module receives the multimedia information which is obtained via collecting ambient information and sent by the collecting device according to the live instruction, the multimedia information may be further sent from the first sending module to the playing terminal and finally be played. Since the collecting device and the live device are separate, quality of the multimedia information collected by the collecting device may be improved by improving configuration parameters of the collecting device. Thus quality of the multimedia information received by the playing terminal may be improved accordingly and playing effect of the multimedia information may be improved.

Alternatively, the multimedia information collected by the collecting device may have a format of HDMI or SDI.

Alternatively, the first receiving module may be further configured to receive the multimedia information sent from the collecting device according to the live instruction based on RTMP.

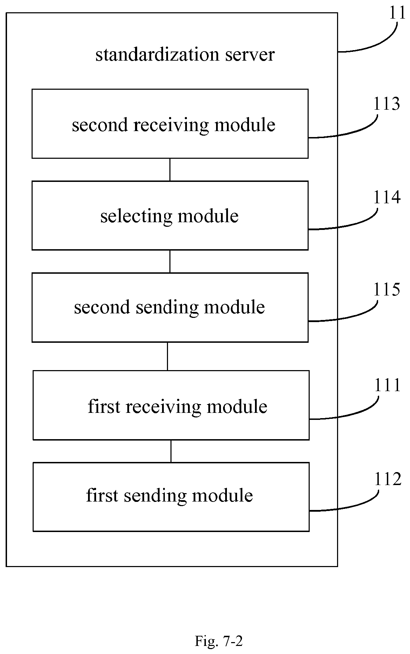

Fig. 7-2 is a schematic diagram illustrating another server 11 according to an example embodiment. The server 11 may have at least two network addresses. On the basis of Fig. 7-1, the server 11 may further include a second receiving module 113, a selecting module 114 and a second sending module 115.

The second receiving module 113 is configured to receive a live request sent from the live terminal.

The selecting module 114 is configured to select a first network address and a second network address from the at least two network addresses of the server, in which the first network address and the second network address may indicate different storage modules of the server.

The second sending module 115 is configured to send the first network address to the live terminal, such that the live terminal may send the live instruction carrying the first network address to the collecting device.

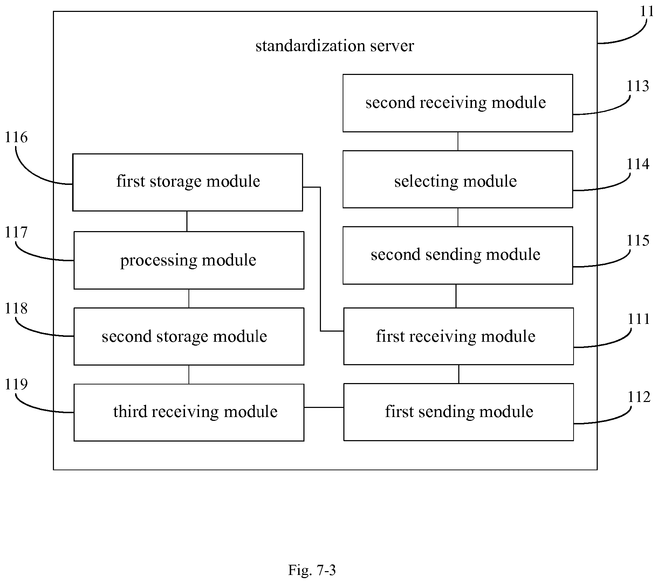

Fig. 7-3 is a schematic diagram illustrating yet another server 11 according to an example embodiment. On the basis of Fig. 7-2, the server 11 may further include a first storage module 116, a processing module 117, a second storage module 118, and a third receiving module 119.

The first storage module 116 is configured to save the multimedia information into a storage module indicated by the first network address.

The processing module 117 is configured to standardize the multimedia information to make parameters of standardized multimedia information in accordance with live parameters of the playing terminal.

The second storage module 118 is configured to save the standardized multimedia information into a storage module indicated by the second network address.

The third receiving module 119 is configured to receive a playing request carrying the second network address from the playing terminal.

The first sending module 112 may further be configured to obtain the standardized multimedia information from the storage module indicated by the second network address and send the standardized multimedia information to the playing terminal by a live delivery mechanism and a CDN mechanism.

In summary, with the server according to embodiments of the present disclosure, when the first receiving module receives the multimedia information which is obtained via collecting ambient information and sent by the collecting device according to the live instruction, the multimedia information may be further sent from the first sending module to the playing terminal and finally be played. Since the collecting device and the live device are separate, quality of the multimedia information collected by the collecting device may be improved by improving configuration parameters of the collecting device. Thus quality of the multimedia information received by the playing terminal may be improved accordingly and playing effect of the multimedia information may be improved.

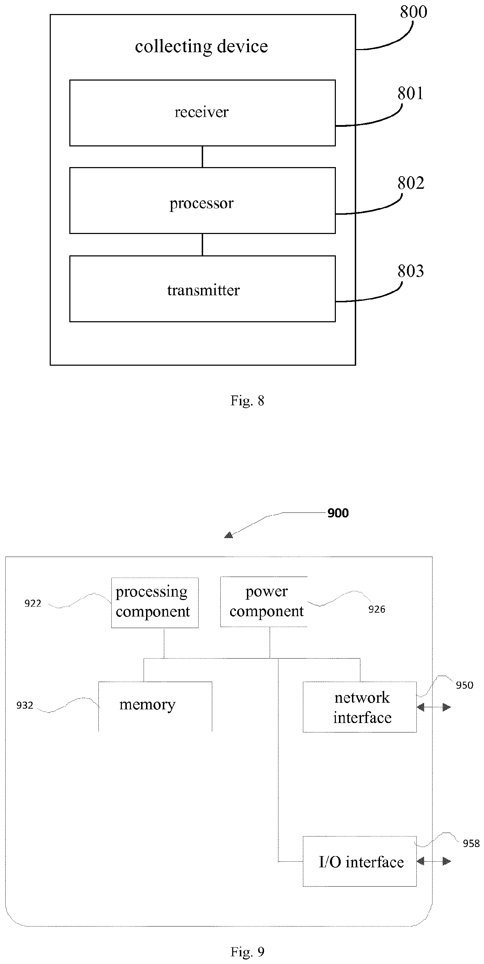

Fig. 8 is a schematic diagram illustrating another collecting device 800 according to an example embodiment. The collecting device 800 may be achieved as the collecting device 10 of the multimedia information live system 1 shown in Fig. 1. The collecting device 800 includes a receiver 801, a processor 802 and a transmitter 803.

The receiver 801 is configured to receive a live instruction sent from a live terminal.

The processor 802 is configured to collect ambient information to obtain multimedia information.

The transmitter 803 is configured to send the multimedia information to the server according to the live instruction, such that the server may send the multimedia information to the playing terminal, and the playing terminal receives and plays the multimedia information.

In summary, with the collecting device according to embodiments of the present disclosure, when the live instruction sent from the live terminal is received by the receiver, the processor may collect the multimedia information according to the live instruction, and the collected multimedia information may be sent from the transmitter to the server such that the multimedia information may be further sent from the server to the playing terminal and finally be played. Since the collecting device and the live device are separate, quality of the multimedia information collected by the collecting device may be improved by improving configuration parameters of the collecting device. Thus quality of the multimedia information received by the playing terminal may be improved accordingly and playing effect of the multimedia information may be improved.

Alternatively, the multimedia information collected by the collecting device may have a format of HDMI or SDI.

Alternatively, the transmitter 803 may be further configured to send the multimedia information to the server based on RTMP.

Alternatively, the live instruction carries a first network address, and the first network address belongs to at least one network address of the server.

Fig. 9 is a schematic diagram illustrating still another server 900 according to an example embodiment. The server 900 may be achieved as the server 11 of the multimedia information live system 1 shown in Fig. 1. Referring to Fig. 9, the server 900 includes a processing component 922 and storage means such as a memory 932. The processing component 922 may further include one or more processors. The storage means may be configured to store instructions that can be executed by the processing component 922, for example an application program. The application program stored in the memory 932 may include one or more modules of which each module may correspond to a set of instructions. Besides, the processing component 922 is configured to execute the instructions so as to perform the multimedia information live method illustrated in Fig.3.

The server 900 may further include a power component 926 configured to manage power source of the server 900; a wire or wireless network interface 950 configured to connect the server 900 to a network; and an input/output (I/O) interface 958. The server 900 may be operated based on an operation system stored in the memory 932, for example Windows ServerTM, Mac OS XTM, UnixTM, LinuxTM, FreeBSDTM or the like.

In summary, with the server according to embodiments of the present disclosure, when the server receives the multimedia information which is obtained via collecting ambient information and sent by the collecting device according to the live instruction, the multimedia information may be further sent from the server to the playing terminal and finally be played. Since the collecting device and the live device are separate, quality of the multimedia information collected by the collecting device may be improved by improving configuration parameters of the collecting device. Thus quality of the multimedia information received by the playing terminal may be improved accordingly and playing effect of the multimedia information may be improved. Alternatively, the multimedia information collected by the collecting device may have a format of HDMI (high definition multimedia interface) or SDI (serial digital interface).

While the disclosure has been shown and described with reference to various embodiments thereof, it will be understood by those skilled in the art that various changes in form and details may be made therein without departing from the scope of the disclosure as defined by the appended claims.

## Claims

1. A multimedia information live method, applied to a collecting device (10) in a multimedia information live system, wherein the multimedia information live system comprises a server (11), a live terminal (12), a playing terminal (13), and the collecting device (10), the live terminal (12) is a terminal used by a user initiating a live performance, and the method comprises:
receiving (201), by the collecting device (10), a live instruction sent from the live terminal (12), wherein the live instruction is configured to trigger the collecting device (10) to collect information, and the live instruction carries a first network address, the first network address belongs to at least one network address of the server (11);
collecting (202), by the collecting device (10), multimedia information via collecting ambient information of the collecting device;
sending (203), by the collecting device (10), the multimedia information to a storage module indicated by the first network address of the server (11) according to the first network address, such that the server (11) standardizes the multimedia information to make parameters of obtained standardized multimedia information in accordance with live parameters of the playing terminal and sends the multimedia information to the playing terminal (13), and the playing terminal (13) receives and plays the standardized multimedia information.

2. The method according to claim 1, wherein, the multimedia information collected by the collecting device (10) has a format of high definition multimedia interface HDMI or serial digital interface SDI.

3. The method according to claim 1 or 2, wherein, sending (203) the multimedia information to the server (11) comprises:
sending the multimedia information to the server (11) based on real time messaging protocol RTMP.

4. A multimedia information live method, applied to a server (11) in a multimedia information live system, wherein the multimedia information live system comprises a collecting device (10), a live terminal (12), a playing terminal (13), and the server (11), the live terminal (12) is a terminal used by a user initiating a live performance, and the method comprises:
receiving (301) multimedia information sent from the collecting device (10) according to a first network address, wherein the multimedia information is obtained by the collecting device (10) via collecting ambient information of the collecting device (10), and the live instruction is sent from the live terminal (12) to the collecting device (10), the first network address belongs to at least one network address of the server (11), the first network address is carried by a live instruction, and the live instruction is configured to trigger the collecting device (10) to collect information;
storing the multimedia information to a storage module indicated by the first network address;
standardizing the multimedia information to make parameters of obtained standardized multimedia information in accordance with live parameters of the playing terminal;
sending (303) the multimedia information to the playing terminal (13), such that the playing terminal (13) receives and plays the multimedia information.

5. The method according to claim 4, wherein, the multimedia information collected by the collecting device has a format of HDMI or SDI, and/or
receiving (303) multimedia information sent from the collecting device (10) according to a live instruction comprises: receiving the multimedia information sent from the collecting device (10) according to the live instruction based on RTMP.

6. The method according to claim 4 or 5, wherein, the server (11) has at least two network addresses, and the method further comprises:
receiving a live request sent from the live terminal (12);
selecting a first network address and a second network address from the at least two network addresses of the server (11), wherein the first network address and the second network address indicate different storage modules of the server (11);
sending the first network address to the live terminal (12), such that the live terminal (12) send the live instruction carrying the first network address to the collecting device (10).

7. The method according to claim 6, further comprising:
saving the multimedia information into a storage module indicated by the first network address;
standardizing the multimedia information to make parameters of standardized multimedia information in accordance with live parameters of the playing terminal (12);
saving the standardized multimedia information into a storage module indicated by the second network address;
receiving a playing request carrying the second network address from the playing terminal (13);
sending the multimedia information to the playing terminal (13) comprises:
obtaining the standardized multimedia information from the storage module indicated by the second network address;
sending the standardized multimedia information to the playing terminal by a live delivery mechanism and a content delivery network CDN mechanism.

8. A collecting device (10), included in a multimedia information live system, wherein the multimedia information live system further comprises a server (11), a live terminal (12), and a playing terminal (13), the live terminal (12) is a terminal used by a user initiating a live performance, and the collecting device (10) comprises:
a receiving module, configured to receive a live instruction sent from the live terminal (12), wherein the live instruction is configured to trigger the collecting device (10) to collect information, and the live instruction carries a first network address, the first network address belongs to at least one network address of the server (11);
a collecting module (102), configured to collect multimedia information via collecting ambient information of the collecting device;
a sending module (103), configured to send the multimedia information to a storage module indicated by the first network address of the server (11) according to the first network address, such that the server (11) standardizes the multimedia information to make parameters of obtained standardized multimedia information in accordance with live parameters of the playing terminal, the server sends the multimedia information to the playing terminal (13), and the playing terminal (13) receives and plays the standardized multimedia information.

9. The collecting device according to claim 8, wherein, the multimedia information collected by the collecting device (10) has a format of HDMI or SDI, and/or
the sending module (103) is further configured to send the multimedia information to the server (11) based on RTMP, and/or
the live instruction carries a first network address, and the first network address belongs to at least one network address of the server (11).

10. A server (11), included in a multimedia information live system, wherein the multimedia information live system further comprises a collecting device (10), a live terminal (12), and a playing terminal (13), the live terminal (12) is a terminal used by a user initiating a live performance, and the server (11) comprises:
a first receiving module (111), configured to receive multimedia information sent from the collecting device (10) according to a first network address, to store the multimedia information to a storage module indicated by the first network address, and to standardize the multimedia information to make parameters of obtained standardized multimedia information in accordance with live parameters of the playing terminal, wherein the multimedia information is obtained by the collecting device (10) via collecting ambient information of the collecting device (10), and the live instruction is sent from the live terminal (12) to the collecting device (10), the first network address belongs to at least one network address of the server (11), the first network address is carried by a live instruction, and the live instruction is configured to trigger the collecting device (10) to collect information;
a first sending module (112), configured to send the multimedia information to the playing terminal (13), such that the playing terminal receives and plays the multimedia information.

11. The server according to claim 10, wherein, the multimedia information collected by the collecting device (10) has a format of HDMI or SDI, and/or
the first receiving module (111) is further configured to receive the multimedia information sent from the collecting device (10) according to the live instruction based on RTMP.

12. The server (11) according to claim 10 or 11, wherein, the server (11) has at least two network addresses, and the server (11) further comprises:
a second receiving module (113), configured to receive a live request sent from the live terminal (12);
a selecting module (114), configured to select a first network address and a second network address from the at least two network addresses of the server (11), wherein the first network address and the second network address indicate different storage modules of the server (11);
a second sending module (115), configured to send the first network address to the live terminal (12), such that the live terminal send the live instruction carrying the first network address to the collecting device (10).

13. The server according to claim 12, further comprising:
a first storage module (116), configured to save the multimedia information into a storage module indicated by the first network address;
a processing module (117), configured to standardize the multimedia information to make parameters of standardized multimedia information in accordance with live parameters of the playing terminal (13);
a second storage module (118), configured to save the standardized multimedia information into a storage module indicated by the second network address;
a third receiving module (119), configured to receive a playing request carrying the second network address from the playing terminal (13);
wherein, the first sending module (112) is further configured to obtain the standardized multimedia information from the storage module indicated by the second network address; send the standardized multimedia information to the playing terminal (13) by a live delivery mechanism and a CDN mechanism.

14. A multimedia information live system, comprising a collecting device (10), a server (11), a live terminal (12) and a playing terminal (13),
wherein, the collecting device (10) is a collecting device (10) according to any one of claims 8 to 9, and the server (11) is a server according to any one of claims 10 to 13;
or, the collecting device (10) comprises: a receiver (800), configured to receive a live instruction sent from the live terminal (12); a processor (802), configured to collect ambient information to obtain multimedia information; a transmitter (803), configured to send the multimedia information to a storage module indicated by the first network address of the server (11) according to the live instruction, such that the server (11) standardizes the multimedia information to make parameters of obtained standardized multimedia information in accordance with live parameters of the playing terminal, sends the multimedia information to the playing terminal (13), and the playing terminal (13) receives and plays the standardized multimedia information, and the server (11) comprises: a processing component (922); a memory (932), configured to store instructions executable by the processing component (922), wherein, the processing component (922) is configured to perform the multimedia information live method according to any one of claims 4 to 7.

## Patentansprüche

1. Multimedia-Informations-Live-Verfahren, das auf eine Sammelvorrichtung (10) in einem Multimedia-Informations-Live-System angewandt wird, wobei das Multimedia-Informations-Live-System einen Server (11), ein Live-Endgerät (12), ein Wiedergabe-Endgerät (13), und die Sammelvorrichtung (10) aufweist, wobei das Live-Endgerät (12) ein Endgerät ist, das von einem Benutzer verwendet wird, der einen Live-Auftritt initiiert, und wobei das Verfahren umfasst:
Empfangen (201), durch die Sammelvorrichtung (10), einer Live-Instruktion, die von dem Live-Endgerät (12) gesendet wird, wobei die Live-Instruktion dazu ausgebildet ist, zu bewirken, dass die Sammelvorrichtung (10) Informationen sammelt, und wobei die Live-Instruktion eine erste Netzwerkadresse trägt, wobei die erste Netzwerkadresse zu mindestens einer Netzwerkadresse des Servers (11) gehört;
Sammeln (202), durch die Sammelvorrichtung (10), von Multimedia-Informationen über das Sammeln von Umgebungsinformationen der Sammelvorrichtung;
Senden (203), durch die Sammelvorrichtung (10), der Multimedia-Informationen an ein Speichermodul, das von der ersten Netzwerkadresse des Servers (11) entsprechend der ersten Netzwerkadresse angegeben wird, so dass der Server (11) die Multimedia-Informationen standardisiert, um Parameter von erhaltenen standardisierten Multimedia-Informationen mit Live-Parametern des Wiedergabe-Endgeräts in Einklang zu bringen, und die Multimedia-Informationen an das Wiedergabe-Endgeräts (13) sendet, und wobei das Wiedergabe-Endgerät (13) die standardisierten Multimedia-Informationen empfängt und wiedergibt.

2. Verfahren nach Anspruch 1, wobei die von der Sammelvorrichtung (10) gesammelten Multimedia-Informationen ein Format einer High Definition Multimedia Interface, HDMI, oder einer Serial Digital Interface, SDI, haben.

3. Verfahren nach Anspruch 1 oder 2, wobei das Senden (203) der Multimedia-Informationen an den Server (11) umfasst:
Senden der Multimedia-Informationen an der Server (11) basierend auf Real Time Messaging Protocol, RTMP.

4. Multimedia-Informations-Live-Verfahren, das auf einen Server (11) in einem Multimedia-Informations-Live-System angewandt wird, wobei das Multimedia-Informations-Live-System eine Sammelvorrichtung (10), ein Live-Endgerät (12), ein Wiedergabe-Endgerät (13) und den Server (11) aufweist, wobei das Live-Endgerät (12) ein Endgerät ist, das von einem Benutzer verwendet wird, der einen Live-Auftritt initiiert, und wobei das Verfahren umfasst:
Empfangen (301) von Multimedia-Informationen, die von der Sammelvorrichtung (10) gesendet werden, entsprechend einer ersten Netzwerkadresse, wobei die Multimedia-Informationen von der Sammelvorrichtung (10) über das Sammeln von Umgebungsinformationen der Sammelvorrichtung (10) erhalten werden, und wobei die Live-Instruktion von dem Live-Endgerät (12) an die Sammelvorrichtung (10) gesendet wird, wobei die erste Netzwerkadresse zu mindestens einer Netzwerkadresse des Servers (11) gehört, wobei die erste Netzwerkadresse von einer Live-Instruktion getragen wird, und wobei die Live-Instruktion dazu ausgebildet ist, zu bewirken, dass die Sammelvorrichtung (10) Informationen sammelt;
Speichern der Multimedia-Informationen in einem Speichermodul, das von der ersten Netzwerkadresse angegeben wird;
Standardisieren der Multimedia-Informationen, um Parameter von erhaltenen standardisierten Multimedia-Informationen mit Live-Parametern des Wiedergabe-Endgeräts in Einklang zu bringen;
Senden (303) der Multimedia-Informationen an das Wiedergabe-Endgerät (13), so dass das Wiedergabe-Endgerät (13) die Multimedia-Informationen empfängt und wiedergibt.

5. Verfahren nach Anspruch 4, wobei die von der Sammelvorrichtung gesammelten Multimedia-Informationen ein Format einer HDMI oder einer SDI haben, und/oder
das Empfangen (303) der Multimedia-Informationen, die von der Sammelvorrichtung (10) entsprechend einer Live-Instruktion gesendet werden, umfasst: Empfangen der von der Sammelvorrichtung (10) gesendeten Multimedia-Informationen entsprechend der Live-Instruktion basierend auf RTMP.

6. Verfahren nach Anspruch 4 oder 5, wobei der Server (11) mindestens zwei Netzwerkadresse aufweist, und wobei das Verfahren ferner umfasst:
Empfangen einer von dem Live-Endgerät (12) gesendeten Live-Anfrage;
Auswählen einer ersten Netzwerkadresse und einer zweiten Netzwerkadresse von den mindestens zwei Netzwerkadressen des Servers (11), wobei die erste Netzwerkadresse und die zweite Netzwerkadresse verschiedene Speichermodule des Servers (11) angeben;
Senden der ersten Netzwerkadresse an das Live-Endgerät (12), so dass das Live-Endgerät (12) die Live-Instruktion, welche die erste Netzwerkadresse trägt, an die Sammelvorrichtung (10) sendet.

7. Verfahren nach Anspruch 6, das ferner umfasst:
Speichern der Multimedia-Informationen in einem Speichermodul, das von der ersten Netzwerkadresse angegeben wird;
Standardisieren der Multimedia-Informationen, um Parameter von standardisierten Multimedia-Informationen mit Live-Parametern des Wiedergabe-Endgeräts (12) in Einklang zu bringen;
Speichern der standardisierten Multimedia-Informationen in einem Speichermodul, das von der zweiten Netzwerkadresse angegeben wird;
Empfangen einer Wiedergabe-Anfrage, welche die zweite Netzwerkadresse trägt, von dem Wiedergabe-Endgerät (13);
wobei das Senden der Multimedia-Informationen an das Wiedergabe-Endgerät (13) umfasst:
Erhalten der standardisierten Multimedia-Informationen von dem Speichermodul, das von der zweiten Netzwerkadresse angegeben wird;
Senden der standardisierten Multimedia-Informationen über einen Live-Zustellungsmechanismus und einen Content-Delivery-Network-, CDN, -Mechanismus an das Wiedergabe-Endgerät.

8. Sammelvorrichtung (10), die in einem Multimedia-Informations-Live-System enthalten ist, wobei das Multimedia-Informations-Live-System ferner einen Server (11), ein Live-Endgerät (12) und ein Wiedergabe-Endgerät (13) aufweist, wobei das Live-Endgerät (12) ein Endgerät ist, das von einem Benutzer verwendet wird, der einen Live-Auftritt initiiert, und wobei die Sammelvorrichtung (10) aufweist:
ein Empfangsmodul, das dazu ausgebildet ist, eine von dem Live-Endgerät (12) gesendete Live-Instruktion zu empfangen, wobei die Live-Instruktion dazu ausgebildet ist, zu bewirken, dass die Sammelvorrichtung (10) Informationen sammelt, und wobei die Live-Instruktion eine erste Netzwerkadresse trägt, wobei die erste Netzwerkadresse zu mindestens einer Netzwerkadresse des Severs (11) gehört;
ein Sammelmodul (102), das dazu ausgebildet ist, Multimedia-Informationen über das Senden von Umgebungsinformationen der Sammelvorrichtung zu sammeln;
ein Sendemodul (103), das dazu ausgebildet ist, Multimedia-Informationen an ein Speichermodul zu senden, das von der ersten Netzwerkadresse des Servers (11) angegeben wird, entsprechend der ersten Netzwerkadresse, so dass der Server (11) die Multimedia-Informationen standardisiert, um Parameter von erhaltenen standardisierten Multimedia-Informationen mit Live-Parametern des Wiedergabe-Endgeräts in Einklang zu bringen, wobei der Server die Multimedia-Informationen an das Wiedergabe-Endgerät (13) sendet, und wobei das Wiedergabe-Endgerät (13) die standardisierten Multimedia-Informationen empfängt und wiedergibt.

9. Sammelvorrichtung nach Anspruch 8, wobei die von der Sammelvorrichtung (10) gesammelten Multimedia-Informationen ein Format einer HDMI oder einer SDI haben, und/oder
das Sendemodul (103) ferner dazu ausgebildet ist, die Multimedia-Informationen an den Server (11) basierend auf RTMP zu senden, und/oder die Live-Instruktion eine erste Netzwerkadresse trägt, und die erste Netzwerkadresse zu mindestens einer Netzwerkadresse des Servers (11) gehört.

10. Server (11), der in einem Multimedia-Informations-Live-System enthalten ist, wobei das Multimedia-Informations-Live-System ferner eine Sammelvorrichtung (10), eine Live-Endgerät (12), und ein Wiedergabe-Endgerät (13) aufweist, wobei das Live-Endgerät (12) ein Endgerät ist, das von einem Benutzer verwendet wird, der einen Live-Auftritt initiiert, und wobei der Server (11) aufweist:
ein erstes Empfangsmodul (111), das dazu ausgebildet ist, von der Sammelvorrichtung (10) gesendete Multimedia-Informationen entsprechend einer ersten Netzwerkadresse zu empfangen, die Multimedia-Informationen in einem Speichermodul zu speichern, das von der ersten Netzwerkadresse angegeben wird, und die Multimedia-Informationen zu standardisieren, um Parameter der erhaltenen standardisierten Multimedia-Informationen mit Live-Parametern des Wiedergabe-Endgeräts in Einklang zu bringen, wobei die Multimedia-Informationen von der Sammelvorrichtung (10) über das Sammeln von Umgebungsinformationen der Sammelvorrichtung (10) erhalten werden, und wobei die Live-Instruktion von dem Live-Endgerät (12) an die Sammelvorrichtung (10) gesendet wird, wobei die erste Netzwerkadresse zu mindestens einer Netzwerkadresse des Servers (11) gehört, wobei die erste Netzwerkadresse von einer Live-Instruktion getragen wird, und wobei die Live-Instruktion dazu ausgebildet ist, zu bewirken, dass die Sammelvorrichtung (10) Informationen sammelt;
ein erstes Sendemodul (112), das dazu ausgebildet ist, die Multimedia-Informationen an das Wiedergabe-Endgerät (13) zu senden, so dass das Wiedergabe-Endgerät die Multimedia-Informationen empfängt und wiedergibt.

11. Server nach Anspruch 10, wobei die von der Sammelvorrichtung (10) gesammelten Multimedia-Informationen ein Format einer HDMI oder einer SDI haben, und/oder
das erste Empfangsmodul (111) ferner dazu ausgebildet ist, die von der Sammelvorrichtung (10) gesendeten Multimedia-Informationen entsprechend der Live-Instruktion basierend auf RTMP zu empfangen.

12. Server (11) nach Anspruch 10 oder 11, wobei der Server (11) mindestens zwei Netzwerkadresse hat, und wobei der Server (11) ferner aufweist:
ein zweites Empfangsmodul (113), das dazu ausgebildet eine, eine von dem Live-Endgerät (12) gesendete Live-Anfrage zu empfangen;
ein Auswahlmodul (114), das dazu ausgebildet ist, eine erste Netzwerkadresse und eine zweite Netzwerkadresse von den mindestens zwei Netzwerkadressen des Servers (11) auszuwählen, wobei die erste Netzwerkadresse und die zweite Netzwerkadresse verschiedene Speichermodule des Servers (11) angeben;
ein zweites Sendemodul (115), das dazu ausgebildet, die erste Netzwerkadresse an das Live-Endgerät (12) zu senden, so dass das Live-Endgerät die Live-Instruktion, welche die erste Netzwerkadresse trägt, an die Sammelvorrichtung (10) sendet.

13. Server nach Anspruch 12, der ferner aufweist:
ein erstes Speichermodul (116), das dazu ausgebildet ist, die Multimedia-Informationen in einem Speichermodul zu speichern, das von der ersten Netzwerkadresse angegeben wird;
ein Verarbeitungsmodul (117), das dazu ausgebildet ist, die Multimedia-Informationen zu standardisieren, um Parameter von standardisierten Multimedia-Informationen mit Live-Parametern des Wiedergabe-Endgeräts (13) in Einklang zu bringen;
ein zweites Speichermodul (118), das dazu ausgebildet ist, die standardisierten Multimedia-Informationen in einem Speichermodul zu speichern, das von der zweiten Netzwerkadresse angegeben wird;
ein drittes Empfangsmodul (119), das dazu ausgebildet ist, eine Wiedergabe-Anfrage, welche die zweite Netzwerkadresse trägt, von dem Wiedergabe-Endgerät (13) zu empfangen;
wobei das erste Sendemodul (112) ferner dazu ausgebildet ist, die standardisierten Multimedia-Informationen von dem Speichermodul zu erhalten, das von der zweiten Netzwerkadresse angegebene wird, und die standardisierten Multimedia-Informationen über einen Live-Zustellungsmechanismus und einen CDN-Mechanismus an das Wiedergabe-Endgerät (13) zu senden.

14. Multimedia-Informations-Live-System, das eine Sammelvorrichtung (10), einen Server (11), ein Live-Endgerät (12) und ein Wiedergabe-Endgerät (13) aufweist,
wobei die Sammelvorrichtung (10) eine Sammelvorrichtung (10) nach einem der Ansprüche 8 bis 9 ist, und wobei der Server (11) ein Server nach einem der Ansprüche 10 bis 13 ist;
oder die Sammelvorrichtung (10) aufweist: einen Empfänger (800), der dazu ausgebildet ist, eine von dem Live-Endgerät (12) gesendete Live-Instruktion zu empfangen; einen Prozessor (802), der dazu ausgebildet ist, Umgebungsinformationen zu sammeln, um Multimedia-Informationen zu erhalten; einen Sender (803), der dazu ausgebildet ist, Multimedia-Informationen an ein Speichermodul zu senden, das von der ersten Netzwerkadresse des Servers (11) entsprechend der Live-Instruktion angegeben wird, so dass der Server (11) die Multimedia-Informationen standardisiert, um Parameter von erhaltenen standardisierten Multimedia-Informationen mit Live-Parametern des Wiedergabe-Endgeräts in Einklang zu bringen, die Multimedia-Informationen an das Wiedergabe-Endgerät (13) sendet, und das Wiedergabe-Endgerät (13) die standardisierten Multimedia-Informationen empfängt und wiedergibt, und wobei der Server (11) aufweist: eine Verarbeitungskomponente (922), einen Speicher (932), der dazu ausgebildet ist, von der Verarbeitungskomponente (922) ausführbare Instruktionen zu speichern, wobei die Verarbeitungskomponente (922) dazu ausgebildet ist, das Multimedia-Informations-Live-Verfahren nach einem der Ansprüche 4 bis 7 durchzuführen.

## Revendications

1. Procédé d'informations multimédia en direct, appliqué à un dispositif de collecte (10) dans un système d'informations multimédia en direct, dans lequel le système d'informations multimédia en direct comprend un serveur (11), un terminal en direct (12), un terminal de lecture (13) et le dispositif de collecte (10), le terminal en direct (12) est un terminal utilisé par un utilisateur lançant une performance en direct, et le procédé comprend :
la réception (201), par le dispositif de collecte (10), d'une instruction en direct envoyée depuis le terminal en direct (12), l'instruction en direct étant configurée pour déclencher le dispositif de collecte (10) afin de collecter des informations, et l'instruction en direct transportant une première adresse réseau, la première adresse réseau appartenant à au moins une adresse réseau du serveur (11) ;
la collecte (202), par le dispositif de collecte (10), d'informations multimédias par la collecte d'informations ambiantes du dispositif de collecte ;
l'envoi (203), par le dispositif de collecte (10), des informations multimédias à un module de stockage indiqué par la première adresse réseau du serveur (11) en fonction de la première adresse réseau, de telle sorte que le serveur (11) normalise les informations multimédias pour définir les paramètres des informations multimédias standardisées obtenues conformément aux paramètres en direct du terminal de lecture et envoie les informations multimédias au terminal de lecture (13), et le terminal de lecture (13) reçoit et lit les informations multimédias standardisées.

2. Procédé selon la revendication 1, dans lequel les informations multimédias collectées par le dispositif de collecte (10) ont un format d'interface multimédia haute définition HDMI ou d'interface numérique série SDI.

3. Procédé selon la revendication 1 ou 2, dans lequel, l'envoi (203) des informations multimédias au serveur (11) comprend :
l'envoi des informations multimédias au serveur (11) sur la base du protocole de messagerie en temps réel RTMP.

4. Procédé d'informations multimédia en direct, appliqué à un serveur (11) dans un système d'informations multimédia en direct, dans lequel le système d'informations multimédia en direct comprend un dispositif de collecte (10), un terminal en direct (12), un terminal de lecture (13) et le serveur (11), le terminal en direct (12) est un terminal utilisé par un utilisateur lançant une performance en direct, et le procédé comprend :
la réception (301) d'informations multimédias envoyées par le dispositif de collecte (10) selon une première adresse réseau, les informations multimédias étant obtenues par le dispositif de collecte (10) par l'intermédiaire de la collecte d'informations ambiantes du dispositif de collecte (10), et l'instruction en direct est envoyée du terminal en direct (12) au dispositif de collecte (10), la première adresse réseau appartient à au moins une adresse réseau du serveur (11), la première adresse réseau est portée par une instruction en direct, et l'instruction en direct est configurée pour déclencher le dispositif de collecte (10) afin de collecter des informations ;
le stockage des informations multimédias dans un module de stockage indiqué par la première adresse réseau ;
la normalisation des informations multimédias pour définir les paramètres d'informations multimédias standardisées obtenues conformément aux paramètres en direct du terminal de lecture ;
l'envoi (303) des informations multimédias au terminal de lecture (13), de telle sorte que le terminal de lecture (13) reçoit et lit les informations multimédias.

5. Procédé selon la revendication 4, dans lequel les informations multimédias collectées par le dispositif de collecte ont un format HDMI ou SDI, et/ou
la réception (303) d'informations multimédias envoyées depuis le dispositif de collecte (10) selon une instruction en direct comprend : la réception des informations multimédias envoyées depuis le dispositif de collecte (10) selon l'instruction en direct basée sur le RTMP.

6. Procédé selon la revendication 4 ou 5, dans lequel le serveur (11) a au moins deux adresses réseau, et le procédé comprend en outre :
la réception d'une demande en direct envoyée depuis le terminal en direct (12) ;
la sélection d'une première adresse réseau et d'une seconde adresse réseau parmi les au moins deux adresses réseau du serveur (11), la première adresse réseau et la seconde adresse réseau indiquant différents modules de stockage du serveur (11) ;
l'envoi de la première adresse réseau au terminal en direct (12), de telle sorte que le terminal en direct (12) envoie l'instruction en direct portant la première adresse réseau au dispositif de collecte (10).

7. Procédé selon la revendication 6, comprenant en outre :
la sauvegarde des informations multimédias dans un module de stockage indiqué par la première adresse réseau ;
la normalisation des informations multimédias pour définir les paramètres d'informations multimédias standardisées conformément aux paramètres en direct du terminal de lecture (12) ;
la sauvegarde des informations multimédias standardisées dans un module de stockage indiqué par la seconde adresse réseau ;
la réception d'une demande de lecture transportant la seconde adresse réseau en provenance du terminal de lecture (13) ;
l'envoi des informations multimédias au terminal de lecture (13) comprend :
l'obtention des informations multimédias standardisées à partir du module de stockage indiqué par la seconde adresse réseau ;
l'envoi des informations multimédias standardisées au terminal de lecture par un mécanisme de distribution en direct et un mécanisme de réseau de distribution de contenu CDN.

8. Dispositif de collecte (10), compris dans un système d'informations multimédia en direct, dans lequel le système d'informations multimédia en direct comprend en outre un serveur (11), un terminal en direct (12) et un terminal de lecture (13), le terminal en direct (12) est un terminal utilisé par un utilisateur lançant une performance en direct, et le dispositif de collecte (10) comprend :
un module de réception, configuré pour recevoir une instruction en direct envoyée depuis le terminal en direct (12), dans lequel l'instruction en direct est configurée pour déclencher le dispositif de collecte (10) afin de collecter des informations, et l'instruction en direct transporte une première adresse réseau, la première adresse réseau appartient à au moins une adresse réseau du serveur (11) ;
un module de collecte (102), configuré pour collecter des informations multimédias en collectant des informations ambiantes du dispositif de collecte ;
un module d'envoi (103), configuré pour envoyer les informations multimédias à un module de stockage indiqué par la première adresse réseau du serveur (11) en fonction de la première adresse réseau, de telle sorte que le serveur (11) normalise les informations multimédias pour définir les paramètres d'informations multimédias standardisées obtenues conformément aux paramètres en direct du terminal de lecture, le serveur envoie les informations multimédias au terminal de lecture (13), et le terminal de lecture (13) reçoit et lit les informations multimédias standardisées.

9. Dispositif de collecte selon la revendication 8, dans lequel les informations multimédias collectées par le dispositif de collecte (10) ont un format HDMI ou SDI, et/ou
le module d'envoi (103) est en outre configuré pour envoyer les informations multimédias au serveur (11) sur la base du RTMP, et/ou
l'instruction en direct transporte une première adresse réseau, et la première adresse réseau appartient à au moins une adresse réseau du serveur (11).

10. Serveur (11), inclus dans un système d'informations multimédia en direct, le système d'informations multimédia en direct comprenant en outre un dispositif de collecte (10), un terminal en direct (12) et un terminal de lecture (13), le terminal en direct (12) est un terminal utilisé par un utilisateur lançant une performance en direct, et le serveur (11) comprend :
un premier module de réception (111), configuré pour recevoir des informations multimédias envoyées par le dispositif de collecte (10) selon une première adresse réseau, pour stocker les informations multimédias dans un module de stockage indiqué par la première adresse réseau, et pour normaliser les informations multimédias pour définir les paramètres d'informations multimédias standardisées obtenues conformément aux paramètres en direct du terminal de lecture, les informations multimédias étant obtenues par le dispositif de collecte (10) en collectant des informations ambiantes du dispositif de collecte (10), et l'instruction en direct étant envoyée à partir du terminal en direct (12) au dispositif de collecte (10), la première adresse réseau appartient à au moins une adresse réseau du serveur (11), la première adresse réseau est portée par une instruction en direct et l'instruction en direct est configurée pour déclencher le dispositif de collecte (10) afin de collecter des informations ;
un premier module d'envoi (112), configuré pour envoyer les informations multimédias au terminal de lecture (13), de telle sorte que le terminal de lecture reçoit et lit les informations multimédias.

11. Serveur selon la revendication 10, dans lequel les informations multimédias collectées par le dispositif de collecte (10) ont un format HDMI ou SDI, et/ou
le premier module de réception (111) est en outre configuré pour recevoir les informations multimédias envoyées depuis le dispositif de collecte (10) selon l'instruction en direct basée sur le RTMP.

12. Serveur (11) selon la revendication 10 ou 11, dans lequel, le serveur (11) a au moins deux adresses réseau, et le serveur (11) comprend en outre :
un deuxième module de réception (113), configuré pour recevoir une demande en direct envoyée depuis le terminal en direct (12) ;
un module de sélection (114), configuré pour sélectionner une première adresse réseau et une seconde adresse réseau parmi les au moins deux adresses réseau du serveur (11), la première adresse réseau et la seconde adresse réseau indiquant différents modules de stockage du serveur (11) ;
un second module d'envoi (115), configuré pour envoyer la première adresse réseau au terminal en direct (12), de telle sorte que le terminal en direct envoie l'instruction en direct portant la première adresse réseau au dispositif de collecte (10).

13. Procédé selon la revendication 12, comprenant en outre :
un premier module de stockage (116), configuré pour enregistrer les informations multimédias dans un module de stockage indiqué par la première adresse réseau ;
un module de traitement (117), configuré pour normaliser les informations multimédias afin de définir les paramètres d'informations multimédias standardisées conformément aux paramètres en direct du terminal de lecture (13) ;
un second module de stockage (118), configuré pour enregistrer les informations multimédias standardisées dans un module de stockage indiqué par la seconde adresse réseau ;
un troisième module de réception (119), configuré pour recevoir une demande de lecture transportant la seconde adresse réseau en provenance du terminal de lecture (13) ;
dans lequel, le premier module d'envoi (112) est en outre configuré pour obtenir les informations multimédias standardisées à partir du module de stockage indiqué par la seconde adresse réseau ; pour envoyer les informations multimédias standardisées au terminal de lecture (13) par un mécanisme de distribution en direct et un mécanisme CDN.

14. Système d'informations multimédias en direct, comprenant un dispositif de collecte (10), un serveur (11), un terminal en direct (12) et un terminal de lecture (13),
dans lequel, le dispositif de collecte (10) est un dispositif de collecte (10) selon l'une quelconque des revendications 8 à 9, et le serveur (11) est un serveur selon l'une quelconque des revendications 10 à 13 ;
ou le dispositif de collecte (10) comprend : un récepteur (800), configuré pour recevoir une instruction en direct envoyée depuis le terminal en direct (12) ; un processeur (802), configuré pour collecter des informations ambiantes afin d'obtenir des informations multimédias ; un émetteur (803), configuré pour envoyer les informations multimédias à un module de stockage indiqué par la première adresse réseau du serveur (11) selon l'instruction en direct, de telle sorte que le serveur (11) normalise les informations multimédias pour définir les paramètres obtenus d'informations multimédias standardisées conformément aux paramètres en direct du terminal de lecture, envoie les informations multimédias au terminal de lecture (13), et le terminal de lecture (13) reçoit et lit les informations multimédias standardisées, et le serveur (11) comprend : un composant de traitement (922) ; une mémoire (932), configurée pour stocker des instructions exécutables par le composant de traitement (922), le composant de traitement (922) étant configuré pour exécuter le procédé d'informations multimédias en direct selon l'une quelconque des revendications 4 à 7.
